# EUROPEAN PATENT APPLICATION

(11) **EP 4 825 732 A1**
(43) Date of publication of application: **21.10.2026**
(21) Application number: 25171262.6
(22) Date of filing: 17.04.2025
(51) Int. Cl.: B64D 27/31, B64D 27/355, B64D 27/40

(54) **FUEL CELL ENCLOSURE POD**

(71) Applicant: Airbus S.A.S., 31700 Blagnac (FR)
(72) Inventor: Bammer, Benedikt, 82024 Taufkirchen (DE)
(74) Representative: LKGLOBAL Partnerschaftsgesellschaft mbB

(57) **Abstract**

The present invention relates to a carrier device (10) for a propulsion system (12) of an aircraft.

In order to provide for a more efficient carrier device for propulsion systems, a carrier device is provided that comprises at least three wall elements (16), a thrust unit interface (18) and a wing interface (20). The at least three wall elements are arranged as part of a protection casing (22) for enclosing at least a part (24) of a fuel cell stack (26), that powers a thrust unit of the propulsion system. The thrust unit interface is configured for holding the thrust unit. The wing interface is configured for mounting the carrier device to a wing of the aircraft. The thrust unit interface and the wing interface are both connected by an attachment (28) to the at least three wall elements. The attachment provides a direct load introduction from the thrust unit interface and the wing interface into a plane (30) of at least one wall element (32) of the three wall elements.

## Description

### FIELD OF THE INVENTION

The present invention relates to a support structure for a propulsion system, more specifically the invention relates to a carrier device, a propulsion arrangement, an aircraft and a method for providing a carrier device.

### BACKGROUND OF THE INVENTION

Propulsion systems, like for example for an aircraft, are usually framed by a support structure, also termed pod. The pod can transfer the thrust of the propulsion system to the aircraft. Therefore, the pod might comprise a framework of longitudinal elements and areal elements that transfer loads. Alternative propulsion systems however might come with a different construction that might lead to incompatibilities with the conventional pod structure.

### SUMMARY OF THE INVENTION

There may thus be a need to provide a more efficient carrier device for propulsion systems.

The object of the present invention is solved by the subject-matter of the independent claims; further embodiments are incorporated in the dependent claims. It should be noted that the following described aspects of the invention apply also for the carrier device, for the propulsion arrangement, for the aircraft and for the method for providing the carrier device.

According to the present invention, a carrier device for a propulsion system of an aircraft is provided. The carrier device has a primary structure, comprising at least three wall elements, a thrust unit interface and a wing interface. The at least three wall elements are arranged as part of a protection casing for enclosing at least a part of a fuel cell stack, that powers a thrust unit of the propulsion system. The thrust unit interface is configured for holding the thrust unit. The wing interface is configured for mounting the carrier device to a wing of the aircraft. The thrust unit interface and the wing interface are both connected by an attachment to the at least three wall elements, wherein the attachment provides a direct load introduction from the thrust unit interface and the wing interface into a plane of at least one wall element of the three wall elements.

As an advantage, the protection casing can be used as structural component of the carrier device. As an advantage, the protection casing, i.e., the at least three wall elements can be combined with the thrust unit interface and the wing interface of the carrier device as primary structural component. As an advantage, the protection casing or the at least three wall elements can be used as substitute for a torsion box, parts of the torsion box of the carrier device or complement the torsion box of the carrier device. As an effect, weight is reduced while the FC stack represents the heaviest part of a propulsion arrangement comprising the carrier structure.

According to an example, the attachment is arranged to provide the direct load introduction at the at least one wall element of the three wall elements in a direction parallel with the plane of the at least one wall element.

As an advantage, a better introduction of load across the plane of the wall elements results.

According to an example, the thrust unit interface and/or the wing interface comprises trusswork providing longitudinal force transmission members. The attachment is provided as at least one connection point. The at least one connection point is configured for receiving the longitudinal force transmission members and distributing their punctual load over the at least one wall element of the at least three wall elements.

As an advantage, a hybrid from longitudinal force transmission members and areal force transmission members results that can be optimized by areal force transmission members regarding the weight of the longitudinal force transmission members.

As an advantage, the at least three wall elements can substitute for parts of the trusswork and parts of the torsion box. As an advantage, the at least three wall elements form a part of the trusswork being configured as the torsion box. As an advantage, the at least three wall elements can substitute parts of the torsion box. As an advantage, the protection casing forms the torsion box.

According to an example, the device further comprises a closing wall element. The closing wall element is configured to isolate the fuel cell stack in the protection casing from the lower part with the at least three wall elements in a gas-leak tight manner from the surroundings. The closing wall element is joinable with the at least three wall elements such that it is isolated from load paths within the at least three wall elements.

As an advantage, critical supply to the FC stack is protected from the loads of the carrier device. As an advantage, the closing wall element of the protection casing can have a thinner wall while not carrying loads and the protection casing can hence be designed with reduced weight.

According to an example, the device further comprises at least one fire wall element, wherein the at least one fire wall element separates the fuel cell stack from the thrust unit interface and/or the wing interface and is configured for fire protection.

As an advantage, a more secure carrier device is provided. As an advantage, a lighter and fire-secured carrier device is provided.

According to an example, the protection casing comprises a bottom insertion chamber, such that the fuel cell stack is insertable from a bottom face of the protection casing.

As an advantage, the exchange of the fuel cell is facilitated while not deteriorating the structural stability of the carrier device.

According to the invention, also a propulsion arrangement is provided. The arrangement comprises a carrier device according to one of the preceding examples, a propulsion system having a thrust unit and at least one fuel cell stack. The propulsion system is supported by the carrier device. The at least one fuel cell stack is housed by a protection casing. The at least one fuel cell stack is connected to the thrust unit to provide electrical power for driving the thrust unit.

As an advantage, a lighter and more stable propulsion arrangement results.

According to the invention, also an aircraft is provided. The aircraft comprises an airframe having a fuselage and at least one wing and at least one propulsion arrangement according to the preceding example. The at least one propulsion arrangement is mounted to the at least one wing via a wing interface in order to apply thrust on the airframe to move the aircraft.

As an advantage, a lighter aircraft results with lower energy consumption.

According to the invention, a method for providing a carrier device for a propulsion system of an aircraft, having a primary structure, is provided. The method comprises the following steps:
- Providing at least three wall elements,
- Providing a thrust unit interface, and
- Providing a wing interface, wherein the at least three wall elements are arranged as part of a protection casing for enclosing at least a part of a fuel cell stack, that powers a thrust unit of the propulsion system, wherein the thrust unit interface is configured for holding the thrust unit, wherein the wing interface is configured for mounting the carrier device to a wing of the aircraft, and wherein the thrust unit interface and the wing interface are both connected by an attachment to the at least three wall elements, wherein the attachment provides a direct load introduction from the thrust unit interface and the wing interface into a plane of at least one wall element of the three wall elements.

According to an aspect, propulsion systems, like for example turborprop engines, use different building components as a primary structure to carry the loads. Some are using frames and rods. Some are using a torsion box comprised of panels at the top, with frames and rods in between. This primary structure takes all thrust and propeller loads and carries the components inside during all normal cases. In an electric driven propulsion system supplied with power by fuel cell, the heaviest part in such a pod is the fuel cell stack. Due to operational restrictions the fuel cell stack should also be kept in an encapsulation. It is a primary aim, to keep the necessary parts of the operation of the fuel cell and reduce weight of the whole system by combining the two main components: The torsion box and the encapsulation/enclosure box of the fuel cell.

According to an aspect, a support structure for an aircraft propulsion unit is provided. The support structure or pod usually is either comprised of a framework structure having a longitudinal elements or longitudinal elements combined with planar elements, that provide rigidity against torsional loads of the propulsion units, also termed "torsion box". Alternative propulsion systems come with a higher load and are bound to elements irreplaceable for their function. Hence it is an objective to keep these necessary parts and use them to replace the longitudinal elements and the planar elements to still provide the required rigidity against torsional loads and to save weight.

According to an aspect, a fuel cell protection casing is provided as primary structure element to an aircraft.

According to an aspect, a fuel cell protection casing with dual functioning is provided: sheltering of the enclosed fuel cell and structural support for a propulsion unit.

According to an aspect, a fuel cell enclosure pod is provided

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a carrier device.
Fig. 2 shows another example of a carrier device.
Fig. 3 shows another example of a carrier device and an example of a propulsion arrangement.
Fig. 4 shows an example of an aircraft.
Fig. 5 shows basic steps of an example of a method for providing a carrier device for a propulsion system of an aircraft.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

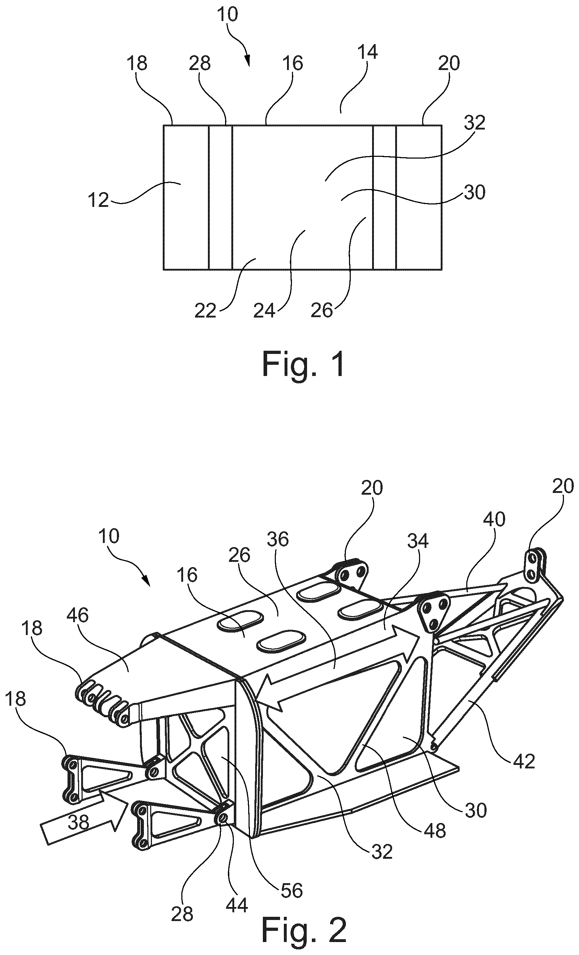

Fig. 1 schematically shows an example of a carrier device 10. The carrier device 10 for a propulsion system 12 of an aircraft, not shown in Fig. 1, has a primary structure 14, comprising at least three wall elements 16, a thrust unit interface 18 and a wing interface 20. The at least three wall elements 16 are arranged as part of a protection casing 22 for enclosing at least a part 24 of a fuel cell stack 26, that powers a thrust unit of the propulsion system 12. The thrust unit interface 18 is configured for holding the thrust unit. The wing interface 20 is configured for mounting the carrier device 10 to a wing of the aircraft. The thrust unit interface 18 and the wing interface 20 are both connected by an attachment 28 to the at least three wall elements 16. The attachment 28 provides a direct load introduction from the thrust unit interface 18 and the wing interface 20 into a plane 30 of at least one wall element 32 of the three wall elements 16.

The carrier device 10 can also be referred to as pod, gondola or nacelle. The carrier device 10 relates to a base for mounting a propulsion system 12 to an aircraft such that the propulsion system 12 can apply its thrust on the aircraft and is sheltered from the aerodynamic conditions of propulsion of the aircraft.

The term "propulsion system" relates to an energy source supply, an energy converter and an energy-thrust converter.

In an example, the propulsion system 12 comprises, as an example for its functional components, a fuel supply, a fuel cell stack 26, as a part of a fuel cell system, and a thrust unit, like a propeller or a jet engine that is powered by the electric energy of the fuel cell stack 26.

In an example, the fuel is hydrogen or any other hydrogen carrying molecule, like methanol or other hydrocarbons.

The term "primary structure" relates to the framework of the carrier device 10, that is critical for maintaining the aircraft's structural integrity and withstanding the aerodynamic forces encountered during flight. The primary structure 14 is designed to handle the primary flight loads, which include weight, drag, thrust, shear forces, bending moments, torsion, compression and tension. While the primary structure 14 is critical for the operation of the aircraft, changing of the primary structure 14 is a highly regulated process and requires strict adherence to aviation standards.

In an example, turboprop engines use different types of primary structure 14. Some are just using frames and rods, and some are using a torsion box at the top, with frames and rods in between, not shown in Fig. 1. This primary structure 14 takes all thrust and propeller loads and carries the components inside during all normal cases.

The term "wall element" relates to a structural component that serves primarily to enclose space, provide shelter, and to support loads.

In an example, the at least one wall element 32 is configured to support loads that act on the carrier device 10 upon hard landing of the aircraft, not shown in Fig. 1.

In an example, the carrier device 10 is configured to support loads that appear upon hard landing of the aircraft.

In an example, the at least one part 24 of the fuel cell stack 26 is provided as upper or lower part of the fuel cell stack 26, not shown in Fig. 1.

The term "thrust unit" relates to self-contained system that generates thrust, for propelling a vehicle or aircraft. It provides the force needed to move something forward. The thrust unit comprises an engine element that is powered by the energy of a fuel cell stack 26, the engine element moves a volume displacement element, like a propeller to generate the thrust for the thrust unit.

The term "thrust unit interface" relates to a joint between a thrust unit and the structure it's meant to propel. It securely transmits the thrust force while also accommodating connections between the engine element and the volume displacement element and the energy converter.

The term "wing interface" relates to a joint between the wing of an aircraft and the carrier device 10. It securely joins the carrier device 10, which generates lift, to the rest of the aircraft. The wing interface 20 also transfers the forces and loads of the carrier device 10 to the aircraft structure.

In an example, the wing interface 20 is connected to the wing box of the aircraft, not shown in Fig. 1.

In an example, the wing interface 20 is attached to a wing spar of the aircraft, not shown in Fig. 1.

The term "protection casing" relates to chamber, an encapsulation, a cavity, a storage, a space, a housing, an enclosure, a casing, a box, a cabinet, a shell, a closure, a cloth, a tube, a sleeve, a sheath designed to safeguard the delicate and sensitive components of a fuel cell stack 26 from various environmental factors. The protection casing 22 serves to contain any leaks of gases, hydrogen, oxygen, or fluids from the fuel cell stack 26 and keep these gases inside the enclosing of the protection casing 22.

In an example, the protection casing 22 is hydrogen gas leak tight, since hydrogen is a small molecule gas with a high diffusivity in relation to fractures, cracks and tears in materials.

In an example, the protection casing 22 is a component of the carrier device 10, as shown in Fig. 1.

In an example, the carrier device 10 is a hybrid of a protection casing 22 and the torsion box of the carrier device 10.

In an example, the carrier device 10 is a hybrid of a protection casing 22 and a trusswork of the thrust unit interface 18 and the wing interface 20, not shown in Fig. 1.

In an example, the protection casing 22 comprises more than three wall elements 16, like four, five, seven, eight or more wall elements, not shown in Fig. 1.

The wall element can also be referred to as wall.

In an example, the wall elements of the protection casing 22 are arranged as cube, as shown in Fig. 1.

In an example, the at least three wall elements 16 are arranged in a bend shape to form an enclosure for the fuel cell stack 26, not shown in Fig. 1.

In an example, the at least three wall elements 16 are arranged in a U-shape to form an enclosure for the fuel cell stack 26, not shown in Fig. 1.

In an example, the at least three wall elements 16 are arranged in a semi-cubical shape to form an enclosure for the fuel cell stack 26, not shown in Fig. 1.

In an example, the wall elements of the protection casing 22 are arranged as polyhedron, such as a tetrahedron, cube, pentahedron, or hexahedron, not shown in Fig. 1.

In an example, the part 24 of the fuel cell stack 26, not shown in Fig. 1, is provided as upper part of the fuel cell stack 26, that relates to the part of the FC stack and the carrier device 10 that points in the opposite direction of gravity in the main travel direction of the carrier device 10, i.e. the aircraft the carrier device 10 is mounted to.

In an example, direct load introduction can also follow the planes of two, three, four or more wall element of the three wall elements 16, not shown in Fig. 1.

The term "fuel cell" relates to a device that converts chemical energy directly into electrical energy. The process is pursued through an electrochemical reaction between a fuel, like hydrogen, and an oxidant, like oxygen, without combustion.

The term "fuel cell stack" or "FC stack" relates to a collection of individual fuel cells connected together to increase the overall voltage and/or power output. Multiple cells are stacked in series, to achieve a higher voltage. They may be connected in parallel to increase current. The stack is a core component of the fuel cell system.

The "fuel cell" can also be referred to as FC.

In an example the FC stack has an upper part and a lower part. The upper part points to the upper face of the protection casing 22 or the at least three wall elements 16 and the lower part points to the bottom face of the protection casing 22 or the at least three wall elements 16.

The term "attachment" relates to any object that can provide a direct physical connection between the thrust unit interface 18, the wing interface 20 and the at least three wall elements 16.

The term "direct" relates to an immediate load transfer without intermediary members or significant distribution to the primary supporting structure. It implies a more or less straight path for the force without any detour or circuiting.

The term "load introduction" relates to the way in which a load is applied to a structural element or system. It may represent the location, magnitude, direction, and distribution of the forces acting on the structure.

The term "direct load introduction" combines the terms of "direct" load transfer and "load introduction." It means that a load is applied immediately and without significant distribution to the primary structural element designed to support it. The load path is short and relatively uncomplex, with minimal intermediary members. The load remains concentrated at or near the point of application.

The term "plane" relates to a face, surface or façade of the wall element.

Fig. 2 shows another example of a carrier device 10. The least one wall element 32 of the three wall elements 16 is configured as areal force transmission element 34 to provide a direct load path, as shown by arrow 36 in Fig. 2, between the thrust unit interface 18 and the wing interface 20. The plane 30 of the at least one wall element 32 is aligned with a main thrust direction, as shown by arrow 38 in Fig. 2, of the thrust unit between the thrust unit interface 18 and the wing interface 20.

The term "areal force transmission element" relates to a flat object that dissipates a punctual load over a surface.

The term "between" relates to a position of the at least one wall element with relation to the thrust unit interface 18 and the wing interface 20.

The term "main thrust direction" relates to the primary direction in which the thrust unit is designed to generate force for propulsion. It is the intended line of action of the thrust force.

In an example, the main thrust direction 38 defines a front end and a rear end of the carrier device 10, as shown in Fig. 2. The rear end of the carrier device 10 and also the rear end of the FC stack lies in direction of thrust behind the thrust unit, where the thrust unit and the thrust unit interface 18 is at the front end and the wing interface 20 is at the rear end of the carrier device 10. The plane 30 of the at least one wall element 32 is provided in between the thrust unit interface 18 and the wing interface 20 and transfers load from the front end to the rear end of the carrier device 10, where the force is dissipated over the plane 30 of the at least one wall element 32. Hence the thrust unit interface 18 and the wing interface 20 are located on opposing sites of the carrier device 10, as shown in Fig. 2.

In an example the at least three planes of the at least three wall elements 16 are aligned with a main thrust direction 38 of the thrust unit between the thrust unit interface 18 and the wing interface 20, as shown in Fig. 2.

In an example the at least three planes of the at least three wall elements 16 that are in a bend-shape or a U-shape, are aligned with a main thrust direction 38 of the thrust unit between the thrust unit interface 18 and the wing interface 20, as shown in Fig. 2.

In an example the at least three planes of the at least three wall elements 16 that are in a bend-shape or a U-shape, are aligned with a main thrust direction 38 of the thrust unit between the thrust unit interface 18 and the wing interface 20, wherein the curvature of the U-shape or the bend shape points to the upper part of the fuel cell stack 26, as shown in Fig. 2.

As an effect, thrust force is evenly distributed over the whole plane of the at least one wall element.

As an advantage, a more areal load introduction results for the carrier device and punctual loads are reduced. As an advantage, the surface of the whole protection casing serves for load distribution between the thrust unit interface 18 and the wing interface 20.

In an example of Fig. 2, the attachment 28 is arranged to provide the direct load introduction at the at least one wall element 32 of the three wall elements 16 in a direction parallel with the plane 30 of the at least one wall element 32.

The term "direction parallel with the plane" relates to a line which is comprised by the plane 30 of the at least one wall element 32.

In an example, the attachment 28 is provided at the edges of the wall element, such that the force flow is not introduced normally to the plane 30 of the wall element.

In an example, not shown in Fig. 2, the load comprises at least one of the group comprising thrust loads, torsional loads and vibrational loads.

As an effect, a plethora of loads can be absorbed by the wall elements of the protection casing. As an advantage, complexity of the carrier device is reduced and the number of measures to absorb the loads is reduced.

In an example of Fig. 2, the attachment 28 is arranged at the at least three wall elements 16 such that the torsional loads, not shown in Fig. 2, travel a longer direct path between the thrust unit interface 18 and the wing interface 20 than the thrust loads.

The term "longer" relates to the length of the load path across the face planes of the protection casing 22 or the at least three wall elements 16.

In an example, the attachment 28 introduces the load at the corners of the wall elements only, such that the torsional loads act on the diagonals of the planes of the at least one wall element 32 or the at least three wall elements 16.

As an advantage, torsional loads are more effectively absorbed by the at least three wall elements 16 or the at least one wall element 32 or the protection casing 22.

In an example of Fig. 2, the thrust unit interface 18 and/or the wing interface 20 comprises trusswork 40 providing longitudinal force transmission members 42. The attachment 28 is provided as at least one connection point 44. The at least one connection point 44 is configured for receiving the longitudinal force transmission members 42 and distributing their punctual load over the at least one wall element 32 of the at least three wall elements 16.

The term "trusswork" relates to a structural framework made of interconnected members, primarily arranged in a triangular pattern, designed to provide strength and stiffness while minimizing weight. The members primarily experience axial forces rather than bending, which supports the construction of lighter constructions for the carrier device 10 compared to solid beams or other structures.

The term "longitudinal force transmission members" relates to structural elements designed to primarily carry forces acting along their longitudinal axis, i.e. their length. They transfer loads within a structure, particularly in resisting tension and compression. The longitudinal force transmission members 42 comprise frames, rods, struts, columns, chords and webs.

In an example, the trusswork 40 comprises the torsion box of the carrier device 10.

The term "connection point" relates to an anchoring point of the longitudinal force transmission members 42 where they can be fixated.

In an example, the trusswork 40 further comprises the torsion box and the at least three wall elements 16 substitute areas or portions of the torsion box, not shown in Fig. 2.

In an example, the longitudinal force transmission members 42 are fixated with a bolted connection at the at least one connection point 44, as shown in Fig. 2.

In an example, the at least one connection point 44 is configured as enforced anchoring point for the trusswork 40 elements at the corners of the wall elements of protection casing 22, as shown in Fig. 2.

In an example, the at least one connection point 44 is formed as eyelet at the at least one wall of the at least three wall elements 16, as shown in Fig. 2.

The term "punctual load" relates to force focused on a specific coordinate.

In an example, the at least one wall element 32 divides the torsion box between the thrust unit interface 18 and the wing interface 20.

In an example of Fig. 2, the at least one wall element 32 of the at least three wall elements 16 provides additional supporting portions 46 to substitute for longitudinal force transmission elements in the trusswork 40 of the thrust unit interface 18 and/or the wing interface 20.

The term "additional supporting portions" relates to areal parts of the at least one wall element 32 that can be substituted for a z-strut in a trusswork, or a web or a chord member.

In an example, the additional supporting portion is formed to complement with the shape of the trusswork 40, not shown in Fig. 2.

As an advantage, the weight of the trusswork is further reduced. As an advantage, load transfer between the at least one wall element 32 and the trusswork is optimized and parasitic loads are minimized. As an advantage, a more closed and integer primary structure of the carrier device results. As an advantage, the torsional deformation of the carrier device is further reduced.

In an example of Fig. 2, the at least one wall element 32 of the at least three wall elements 16 comprises reinforcing elements 48. The reinforcing elements 48 are formed to enhance the at least one wall element 32 against torsional loads and thrust loads.

The term "reinforcing elements" relates to elements to enhance the structural integrity and durability of the wall elements.

In an example, the plane 30 of the at least one wall element 32 is provided with a trusswork structure of the wall material, as shown in Fig. 2.

In an example, the at least one wall element 32 contains a honeycomb structure to improve stiffness, not shown in Fig. 2.

In an example, traverse supporting wall elements within the protection casing 22 are provided to support the at least three wall elements 16, not shown in Fig. 2.

In an example, the reinforcing elements 48 are also provided as walls in the trusswork 40 of the thrust unit interface 18 and the wing interface 20, not shown in Fig. 2.

In an example, the reinforcing elements 48 are formed to enhance the at least one wall element 32 against aerodynamic loads, not shown in Fig. 2.

As an advantage, stiffness of the protection casing 22 and the at least three wall elements against torsional loads and forces are further improved.

In an example, the at least three wall elements 16 are arranged in an angled cone-like manner, wherein the tip of the cone points towards the thrust unit.

In an example, some wall elements of the at least three wall elements 16 are shaped as diagonally tapering parallelograms that run towards the thrust unit, as shown in Fig. 2.

In an example, a joining area between the at least three wall elements 16 is configured for load transmission while being gas-leak tight.

As an advantage, the protection casing is hydrogen-leak tight under high loads.

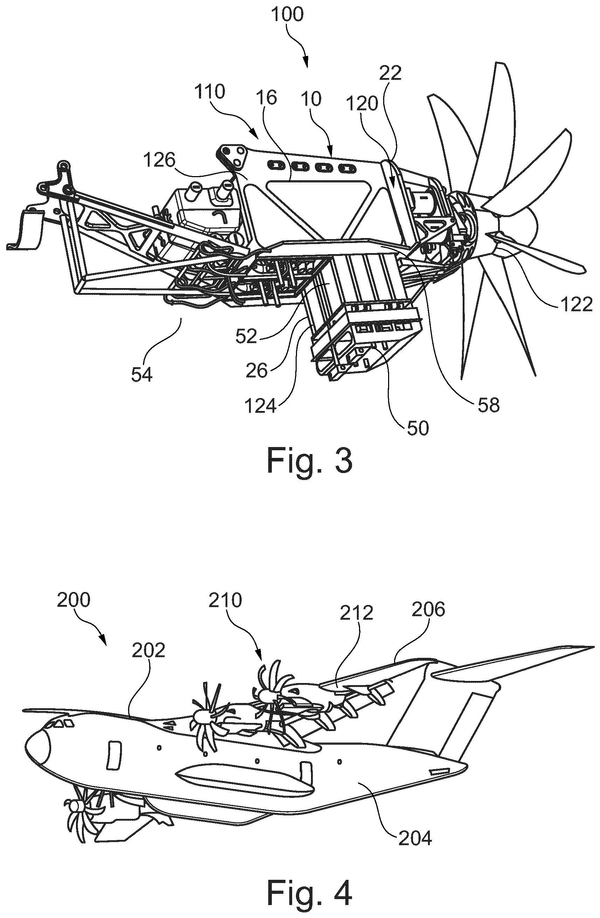

Fig. 3 shows another example of a carrier device 10 and an example of a propulsion arrangement 100. The device 10 comprises a closing wall element 50. The closing wall element 50 is configured to isolate the fuel cell stack 26 in the protection casing 22 from the lower part 52 with the at least three wall elements 16 in a gas-leak tight manner from the surroundings 54. The closing wall element 50 is joinable with the at least three wall elements 16 such that it is isolated from load paths within the at least three wall elements 16.

The term "closing wall element" relates to lid, a cover of the protection casing 22 of the FC stack to sealingly enclose the FC stack in the protection casing 22 comprising the at least three wall elements 16. The cover or lid is applied from the bottom side of the carrier device 10 and also the FC stack, since this is the primary introduction direction of the FC stack into the carrier device 10. The at least three wall elements 16 form an upper shell part, wherein the closing wall element 50 forms the lower shell part, as shown in Fig. 3.

In an example, the closing wall element 50 is arranged as part of a protection casing 22 for enclosing at least a part 24 of a fuel cell stack 26, as shown in Fig. 3.

In an example, the closing wall element 50 is configured as part of a protection casing 22 for enclosing at least a part 24 of a fuel cell stack 26, as shown in Fig. 3.

In an example, the closing wall element 50 is configured as bottom part or bottom face of a protection casing 22 for enclosing at least a part 24 of a fuel cell stack 26. The term "isolate" relates to the protection casing 22 in separating the FC stack from the environment outside the carrier box, as shown in Fig. 3.

In an example, FC stack release leaking hydrogen. This hydrogen requires collection which is provided by the gas leak tight protection casing 22.

In an example, the FC stack is removable from the carrier device 10 by opening the closing wall element 50 and detaching the FC stack.

The term "lower part" relates to the portion of the FC stack opposite its upper part, the lower part 52 points in direction ground and the closing wall element 50.

The term "surroundings" relates to the atmosphere, an airport or any environmental condition under which the carrier device 10 is operated.

In an example, the closing wall element 50 comprises a FC stack manifold element for gas supply and degassing of the FC stack.

In an example, the closing wall element 50 is the manifold element of the FC stack.

In an example, a base part of the FC stack forms the closing wall element 50.

In an example, the at least three wall elements 16 of the protection casing 22 and the closing wall element 50 enclose the FC stack in protection gas, not shown in Fig. 3.

In an example, the at least one wall element 32 and/or the closing wall element 50 comprise channels for gas supply or degassing the FC stack or the chamber of the FC stack.

In an example, degassing channels may be provided at the wall elements to enable escape of hydrogen gas from the protection casing 22, not shown in Fig. 3.

With reference back to Fig. 2, the device 10 further comprises at least one fire wall element 56. The at least one fire wall element 56 separates the fuel cell stack 26, not visible in Fig. 2, from the thrust unit interface 18 and/or the wing interface 20 and is configured for fire protection.

The term "fire wall element" relates to a wall element that is resistant against fire caused by a fuel of the FC stack and hence protects the critical infrastructure of the carrier device 10, like the thrust unit and the wing interface 20 and also the wing of the aircraft from a fire of the fuel cell.

In an example, the at least one fire wall element 56 carries load.

In an example, the fire wall element 56 is resistant against temperatures of hydrogen fire, not shown in Fig. 3.

In an example of Fig. 3 the protection casing 22 comprises a bottom insertion chamber 58, such that the fuel cell stack 26 is insertable from a bottom face of the protection casing 22.

In an example, the load carrying part of the carrier device 10 is provided at the upper part of the fuel cell from the trusswork 40 interface and the at least three wall elements 16 of the protection casing 22. In order to not disconnect this construction, the FC stack is inserted from the lower part 52 or the bottom side of the carrier device 10.

Fig. 3 also shows an example of a propulsion arrangement 100. The propulsion arrangement 100, comprises a carrier device 110 according to one of the preceding examples, a propulsion system 120 having a thrust unit 122 and at least one fuel cell stack 124. The propulsion system 120 is supported by the carrier device 110. The at least one fuel cell stack 124 is housed by a protection casing 126. The at least one fuel cell stack 124 is connected to the thrust unit to provide electrical power for driving the thrust unit.

In an example, the propulsion system 120 comprises an electric propeller driven by a PEM fuel cell.

Fig. 4 shows an example of an aircraft 200. The aircraft 200, comprises an airframe 202 having a fuselage 204 and at least one wing 206 and at least one propulsion arrangement 210 according to the previous example. The at least one propulsion arrangement 210 is mounted to the at least one wing 206 via a wing interface 212 in order to apply thrust on the airframe 202 to move the aircraft 200.

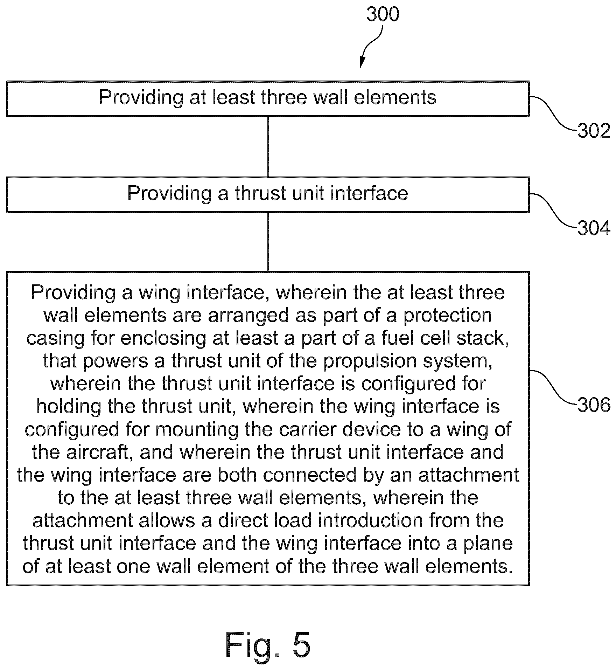

Fig. 5 shows basic steps of an example of a method for providing a carrier device for a propulsion system of an aircraft. The method 300 for providing the carrier device for a propulsion system of an aircraft, comprises the following steps:
- In a first step 302 at least three wall elements are provided.
- In a second step 304 a thrust unit interface is provided.
- In a third step 306 a wing interface is provided. The at least three wall elements are arranged as part of a protection casing for enclosing at least a part of a fuel cell stack, that powers a thrust unit of the propulsion system. The thrust unit interface is configured for holding the thrust unit. The wing interface is configured for mounting the carrier device to a wing of the aircraft. The thrust unit interface and the wing interface are both connected by an attachment to the at least three wall elements. The attachment provides a direct load introduction from the thrust unit interface and the wing interface into a plane of at least one wall element of the three wall elements.

In an example of the method, part of the trusswork of a carrier device is exchanged by wall elements of a protection casing of a FC stack.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A carrier device (10) for a propulsion system (12) of an aircraft, having a primary structure (14), comprising:
- at least three wall elements (16);
- a thrust unit interface (18); and
- a wing interface (20);
wherein the at least three wall elements are arranged as part of a protection casing (22) for enclosing at least a part (24) of a fuel cell stack (26), that powers a thrust unit of the propulsion system;
wherein the thrust unit interface is configured for holding the thrust unit;
wherein the wing interface is configured for mounting the carrier device to a wing of the aircraft; and
wherein the thrust unit interface and the wing interface are both connected by an attachment (28) to the at least three wall elements, wherein the attachment provides a direct load introduction from the thrust unit interface and the wing interface into a plane (30) of at least one wall element (32) of the three wall elements.

2. Device according to claim 1, wherein the least one wall element of the three wall elements is configured as areal force transmission element (34) to provide a direct load path (36) between the thrust unit interface and the wing interface; and
wherein the plane of the at least one wall element is aligned with a main thrust direction (38) of the thrust unit between the thrust unit interface and the wing interface.

3. Device according to claim 1 or 2, wherein the attachment is arranged to provide the direct load introduction at the at least one wall element of the three wall elements in a direction parallel with the plane of the at least one wall element.

4. Device according to claim 1, 2 or 3, wherein the load comprises at least one of the group comprising:
- thrust loads;
- torsional loads; and
- vibrational loads.

5. Device according to one of the preceding claims, wherein the attachment is arranged at the at least three wall elements such that the torsional loads travel a longer direct path between the thrust unit interface and the wing interface than the thrust loads.

6. Device according to one of the preceding claims, wherein the thrust unit interface and/or the wing interface comprises trusswork (40) providing longitudinal force transmission members (42); and
wherein the attachment is provided as at least one connection point (44), wherein the at least one connection point is configured for receiving the longitudinal force transmission members and distributing their punctual load over the at least one wall element of the at least three wall elements.

7. Device according to claim 6, wherein the at least one wall element of the at least three wall elements provides additional supporting portions (46) to substitute for longitudinal force transmission elements in the trusswork of the thrust unit interface and/or the wing interface.

8. Device according to one of the preceding claims, wherein the at least one wall element of the at least three wall elements comprises reinforcing elements (48), wherein the reinforcing elements are formed to enhance the at least one wall element against torsional loads and thrust loads.

9. Device according to one of the preceding claims, further comprising a closing wall element (50);
wherein the closing wall element is configured to isolate the fuel cell stack in the protection casing from the lower part (52) with the at least three wall elements in a gas-leak tight manner from the surroundings (54); and
wherein the closing wall element is joinable with the at least three wall elements such that it is isolated from load paths within the at least three wall elements.

10. Device according to one of the preceding claims, further comprising at least one fire wall element (56), wherein the at least one fire wall element separates the fuel cell stack from the thrust unit interface and/or the wing interface and is configured for fire protection.

11. Device according to one of the preceding claims, wherein the protection casing comprises a bottom insertion chamber (58), such that the fuel cell stack is insertable from a bottom face of the protection casing.

12. A propulsion arrangement (100), comprising:
- a carrier device (110) according to one of the claims 1 to 11;
- a propulsion system (120) having a thrust unit (122) and at least one fuel cell stack (124);
wherein the propulsion system is supported by the carrier device;
wherein the at least one fuel cell stack is housed by a protection casing; and
wherein the at least one fuel cell stack is connected to the thrust unit to provide electrical power for driving the thrust unit.

13. An aircraft (200), comprising:
- an airframe (202) having a fuselage (204) and at least one wing (206); and
- at least one propulsion arrangement (210) according to claim 12;
wherein the at least one propulsion arrangement is mounted to the at least one wing via a wing interface (212) in order to apply thrust on the airframe to move the aircraft.

14. A method (300) for providing a carrier device for a propulsion system of an aircraft, having a primary structure, comprising the following steps:
- Providing (302) at least three wall elements;
- Providing (304) a thrust unit interface; and
- Providing (306) a wing interface, wherein the at least three wall elements are arranged as part of a protection casing for enclosing at least a part of a fuel cell stack, that powers a thrust unit of the propulsion system, wherein the thrust unit interface is configured for holding the thrust unit, wherein the wing interface is configured for mounting the carrier device to a wing of the aircraft, and wherein the thrust unit interface and the wing interface are both connected by an attachment to the at least three wall elements, wherein the attachment provides a direct load introduction from the thrust unit interface and the wing interface into a plane of at least one wall element of the three wall elements.
